# EUROPEAN PATENT SPECIFICATION

(11) **EP 4 122 971 B1**
(45) Date of publication and mention of the grant of the patent: **19.06.2024**
(21) Application number: 21187474.8
(22) Date of filing: 23.07.2021
(51) Int. Cl.: C08G 65/00

(54) **COPOLYMERISATION OF ALDEHYDES AND VINYL ETHERS**
COPOLYMERISATION VON ALDEHYDEN UND VINYLETHERN
COPOLYMÉRISATION D'ALDÉHYDES ET D'ÉTHERS VINYLIQUES

(43) Date of publication of application: 25.01.2023
(73) Proprietor: BASF SE, 67056 Ludwigshafen am Rhein (DE)
(72) Inventor: VANDERMEULEN, Guido, 67056 Ludwigshafen (DE); LEDERHOSE, Paul, 67056 Ludwigshafen (DE); CSIHONY, Szilard, 69517 Gorxheimertal (DE)
(74) Representative: BASF IP Association

(56) References cited:
- ISHIDO YASUSHI ET AL: "Controlled cationic copolymerization of benzaldehyde with isobutyl vinyl ether using base-assisting system", JOURNAL OF POLYMER SCIENCE PART A: POLYMER CHEMISTRY, vol. 48, no. 8, 8 March 2010 (2010-03-08), pages 1838-1843, XP055879888, US ISSN: 0887-624X, DOI: 10.1002/pola.23945 Retrieved from the Internet: URL:https://onlinelibrary.wiley.com/doi/fu ll-xml/10.1002/pola.23945>
- ISHIDO YASUSHI ET AL: "Well-Defined Alternating Copolymers of Benzaldehydes with Vinyl Ethers: Precision Synthesis by Cationic Copolymerization and Quantitative Degradation to Cinnamaldehydes", MACROMOLECULES, vol. 43, no. 7, 13 April 2010 (2010-04-13) , pages 3141-3144, XP055879878, US ISSN: 0024-9297, DOI: 10.1021/ma902840d Retrieved from the Internet: URL:https://pubs.acs.org/doi/pdf/10.1021/m a902840d>
- ZHANG JINGHAN ET AL: "Characteristics and Mechanism of Vinyl Ether Cationic Polymerization in Aqueous Media Initiated by Alcohol/B(C6F5)3/Et2O", POLYMERS, vol. 11, no. 3, 1 March 2019 (2019-03-01), page 500, XP055879875, CH ISSN: 2073-4360, DOI: 10.3390/polym11030500

## Description

The present invention concerns a process for manufacturing of copolymers of aldehydes and vinyl ethers and certain copolymers of aldehydes and vinyl ethers.

Copolymers of aldehydes and vinyl ethers are known in the prior art, e.g. from results of the work group of Prof. Aoshima at Osaka University. In Macromolecules 2010, 43, 3141-3144 it is described how benzaldehydes and vinyl ethers are cationically copolymerised in the presence of GaCh as Lewis Acid using ethane sulfonic acid as Bronsted Acid.

It is a disadvantage of this process that GaCl₃ is an expensive Lewis Acid and not available in industrial scale. In addition, the described process employs extensive drying of reagents before polymerisation. Drying towers and distillation of reagents are employed before copolymerisation is undertaken, most probably to ensure a low molecular weight distribution of the resulting polymers. Furthermore, the Macromolecules reference discloses only benzaldehyde and *p-*methoxy benzaldehyde as reactants and is silent about the use of other aldehydes.

From the same work group another Macromolecules reference was published (Macromolecules 2012, 45, 4060-4068) which discloses reaction of cycloaliphatic aldehydes, such as naturally occurring aldehydes. Furthermore, the use of FeCl₃/EtSO₃H and EtAlCl₂/EtSO₃H as catalyst was disclosed, however, the reported conversion was low although the reaction time was 48 hours. In the prior art furthermore copolymerisation of furfural was disclosed, see Aso et al., Die Makromolekulare Chemie 1973, 172, 85. In this reference *inter alia* BF₃•O(C₂H₅) is used as Lewis Acid for the polymerisation of furfural with e.g. *p*-tolyl vinyl ether, however, the reaction is allegedly reported to occur under opening of the furan ring. Despite the long reaction time reported, conversion rates are low and partly yield insoluble products. ISHIDO YASUSHI ET AL in JOURNAL OF POLYMER SCIENCE PART A: POLYMER CHEMISTRY, vol. 48, no. 8, 8 March 2010, pages 1838-1843, ISHIDO YASUSHI ET AL in MACROMOLECULES, vol. 43, no. 7, 13 April 2010 (2010-04-13), pages 3141-3144, and JINGHAN ET AL in POLYMERS, vol. 11, no. 3, 1 March 2019 (2019-03-01), page 500 disclose polymerization of vinyl ethers with Lewis acids.

It was an object of the present invention to find reaction conditions under which aldehydes and vinyl ethers undergo reaction and according to which aldehydes other than aromatic or cycloaliphatic aldehydes can be brought to reaction. Especially, a readily available Lewis Acid should be used together with a reaction time allowing an acceptable space-time-yield. In addition, the Lewis Acid used should be resilient so that there is no need to use dried reagents in the reaction.

The object was achieved by a process for copolymerisation of at least one vinyl ether (V) and at least one aldehyde (A), optionally in the presence of at least one solvent, characterised in that the copolymerisation is carried out in the presence of at least one reactive boron trihalide complex of the formula

BX₃ × x ROH

wherein
X is a halide, preferably selected from the group consisting of fluorine, chlorine, and bromine, more preferably selected from the group consisting of fluorine and chlorine, and especially fluorine,
ROH is an alcohol or water, preferably an alkanol, more preferably a linear or branched C₁-C₁₀-alkanol, even more preferably a linear or branched C₁-C₄-alkanol
x is a positive number of more than 0 (zero)
optionally in the presence of at least one Brønsted Acid (BA) and/or Lewis Base (LB) wherein the molar ratio of vinyl ethers (V) : aldehydes (A) is from 10 : 1.2 to 1 : 1.2, preferably from 7 : 1.2 to 1 : 1.2, more preferably from 5 : 1.2 to 1 : 1.2, even more preferably from 3 : 1.2 to 1 : 1.2, and especially from 2 : 1.2 to 1 : 1.2.

It is an advantage compared to the documents pointed out above that the copolymerisation according to the present invention takes place in the presence of a complex based on boron trihalides as a Lewis Acid which is readily available even in industrial scale.

Suitable boron trihalides are boron trifluoride, boron trichloride, and boron tribromide, preferably boron trifluoride and boron trichloride, and more preferably boron trifluoride.

The boron trihalides are used as a complex (BX₃ × x ROH) with at least one alcohol ROH or water, preferably one or two alcohols, and more preferably one alcohol.

In one embodiment of the present invention ROH may be water, i.e. R is hydrogen.

Alcohols ROH are selected from the group consisting of aliphatic, cycloaliphatic, and aromatic alcohols, preferably aliphatic or aromatic alcohols, and more preferably aliphatic alcohols.

The alcohol ROH may bear one or up to 4 hydroxy groups, preferably 1 to 3 hydroxy groups, more preferably 1 or 2 hydroxy groups, and especially 1 hydroxy group.

Aliphatic alcohols may be optionally substituted C₁- to C₂₀-aliphatic alcohols, preferably C₁- to C₂₀-alkanols, more preferably C₁- to C₁₀-alkanols, even more preferably C₁- to C₆-alkanols, and especially preferably C₁- to C₄-alkanols.

Cycloaliphatic alcohols may be optionally substituted C₅- to C₁₂-cycloaliphatic alcohols, preferably C₅- to C₁₂-cycloalkanols, more preferably C₅- to C₇-cycloalkanols, and especially C₅- to C₆-cycloalkanols.

Aromatic alcohols may be optionally substituted C₆- to C₁₂-aromatic alcohols.

Examples for the above-mentioned alcohols are methanol, ethanol, n-propanol, isopropanol, n-butanol, sec-butanol, isobutanol, tert-butanol, n-pentanol, n-hexanol, n-heptanol, n-octanol, 2-ethylhexanol, cyclohexanol, phenol, p-methoxyphenol, o-, m- and p-cresol, benzyl alcohol, p-methoxybenzyl alcohol, 1- and 2-phenylethanol, 1- and 2-(p-methoxyphenyl)ethanol, 1-, 2- and 3-phenyl-1-propanol, 1-, 2- and 3-(p-methoxyphenyl)-1-propanol, 1- and 2-phenyl-2-propanol, 1- and 2-(p-methoxyphenyl)-2-propanol, 1-, 2-, 3- and 4-phenyl-1-butanol, 1-, 2-, 3- and 4-(p-methoxyphenyl)-1-butanol, 1-, 2-, 3- and 4-phenyl-2-butanol, 1-, 2-, 3- and 4-(p-methoxyphenyl)-2-butanol, 9-methyl-9H-fluoren-9-ol, 1,1-diphenylethanol, 1,1-diphenyl-2-propyn-1-ol, 1,1-diphenylpropanol, 4-(1-hydroxy-1-phenylethyl)benzonitrile, cyclopropyldiphenylmethanol, 1-hydroxy-1,1-diphenylpropan-2-one, benzilic acid, 9-phenyl-9-fluorenol, triphenylmethanol, diphenyl(4-pyridinyl)methanol, alpha,alpha-diphenyl-2-pyridinemethanol, 4-methoxytrityl alcohol (especially polymer-bound as a solid phase), alpha-tert-butyl-4-chloro-4'-methylbenzhydrol, cyclohexyldiphenylmethanol, alpha-(p-tolyl)-benzhydrol, 1,1,2-triphenylethanol, alpha,alpha-diphenyl-2-pyridineethanol, alpha,alpha-4-pyridylbenzhydrol N-oxide, 2-fluorotriphenylmethanol, triphenylpropargyl alcohol, 4-[(diphenyl)hydroxymethyl]benzonitrile, 1-(2,6-dimethoxyphenyl)-2-methyl-1-phenyl-1-propanol, 1,1,2-triphenylpropan-1-ol and p-anisaldehyde carbinol.

Among these alcohols aliphatic alcohols are preferred, more preferred are the alkanols, and especially preferred are methanol, ethanol, n-propanol, iso-propanol, n-butanol, and tert. butanol.

"x" is the molar ratio of alcohol or water and boron trihalide in the complex BX₃ × x ROH. According to the present invention "x" is a positive number of more than 0 (zero).

Preferably x may be 0.1 to 10, more preferably 0.2 to 5, even more preferably 0.3 to 3, very preferably 0.5 to 2, and especially 0.7 to 1.3.

Optionally the boron trihalide in the complex may further comprise at least one Brønsted Acid (BA) and/or at least one Lewis Base (LB).

The at least one Brønsted Acid (BA) is preferably selected from the group consisting of organic sulfonic acids and sulfuric acid, preferably sulfonic acids, more preferably aliphatic or aromatic sulfonic acids, even more preferably C₁- to C₄-alkyl sulfonic acids, especially methane sulfonic acid and ethane sulfonic acid. Examples for the less preferred aromatic sulfonic acids are optionally substituted C₆- to C₁₂-aromatic sulfonic acids, such as benzene sulfonic acid, p-toluene sulfonic acid, and para-C₆- to C₂₀-alkyl benzene sulfonic acid.

The at least one Lewis Base (LB) comprises at least one oxygen atom with at least one lone electron pair, preferably at least one oxygen atom with at least one lone electron pair, more preferably the Lewis Base is selected from the group consisting of organic compounds with at least one ether or ester function, especially preferably selected from the group consisting of ethers, preferably aliphatic or cycloaliphatic ethers, more preferably selected from the group consisting of di(C₁- to C₄-alkyl) ethers, tetrahydrofurane, tetrahydropyrane, and dioxane, and especially selected from the group consisting of tetrahydrofurane, tetrahydropyrane, and dioxane.

Using at least one Brønsted Acid (BA) and/or at least one Lewis Base (LB), the complex according to the invention follows the lowing formula

BX₃ × x ROH × y BA × z LB

wherein
number "y" and "z" independently of another may be 0 (zero) or a positive number.

Preferably y may be 0 to 10, more preferably 0.1 to 5, even more preferably 0.15 to 3, very preferably 0.2 to 2, and especially 0.25 to 1.5.

Preferably z may be 0 to 500, more preferably 0 to 450, even more preferably 0 to 400, very preferably 0 to 350, and especially 0 to 300.

It is also possible to use aluminium or iron halides rather than the boron trihalide complex according to the invention.

Examples for aluminium halides are aluminium trihalides, alkylaluminium halides, and dialkylal-uminium halides with aluminium trihalides being preferred.

A suitable aluminium trihalide, hereinafter referred to as AlX₃, is especially aluminium trifluoride, aluminium trichloride or aluminium tribromide, preferably aluminium trichloride.

A useful alkylaluminium halide is especially a mono(C₁- to C₄-alkyl)aluminium dihalide or a di(C₁- to C₄-alkyl)aluminium monohalide, for example methylaluminium dichloride, ethylaluminium dichloride, iso-butylaluminium dichloride, dimethylaluminium chloride or diethylaluminium chloride, diiso-butylaluminium chloride, preferably ethylaluminium dichloride, iso-butylaluminium dichloride, diethylaluminium chloride or diiso-butylaluminium chloride and very preferably ethylaluminium dichloride and iso-butylaluminium dichloride.

Especially suitable iron trihalides, hereinafter referred to as FeX₃, are iron trifluoride, iron trichloride or iron tribromide, preferably iron trichloride.

These Lewis Acids other than BX₃ may also be used in a complex as described above, i.e.

AlX₃ × x ROH × y BA × z LB

respectively

FeX₃ × x ROH × y BA × z LB

wherein
X, x, y, z, ROH, BA, and LB are defined as above.

Another object of the present invention is the use of such a complex for copolymerising vinyl ethers (V) and aldehydes (A).

Vinyl ethers (V) for use in the copolymerisation according to the present invention are C₁- to C₂₀-alkyl vinyl ethers, C₃- to C₂₀-alkenyl vinyl ethers, C₅- to C₁₂-cycloalkyl vinyl ethers, cyclic vinylethers, such as 2,3-dihydrofuran, 3,4-dihydropyran, vinyl ethers comprising alkylene glycol side chains, vinyl ethers comprising ester groups in the side chain, and C₆- to C₁₂-aryl vinyl ethers, preferably C₁- to C₂₀-alkyl vinyl ethers, C₃- to C₂₀-alkenyl vinyl ethers, and C₅- to C₁₂-cycloalkyl vinyl ethers, more preferably C₁- to C₂₀-alkyl vinyl ethers and C₃- to C₂₀-alkenyl vinyl ethers, and especially C₁- to C₂₀-alkyl vinyl ethers.

In one embodiment of the present invention the vinyl ether (V) may bear two or more vinyl ether groups, preferably two to six, more preferably two to four, even more preferably two to three, and especially exactly two.

Preferred vinyl ethers bearing two or more vinyl ether groups are vinyl ethers of polyols, preferably diols or polyols with a functionality of three or higher.

Diols used in accordance with the present invention include for example ethylene glycol, propane-1,2-diol, pro-pane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, hep-tane-1,2-diol, 1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, 1,2- and 1,3-cyclopentanediols, 1,2-, 1,3-and 1,4-cyclo-hexanediols, 1,1-, 1,2-, 1,3- and 1,4-bis(hydroxymethyl) cyclohexanes, 1,1-, 1,2-, 1,3- and 1,4-bis(hydroxyethyl)cyclohexanes, neopentyl glycol, 2-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, dipropylene glycol, tripropylene glycol, polyethylene glycols HO(CH₂-CH₂O)ₙ-H or polypropylene glycols HO(CH(CH₃)-CH-O)ₙ-H, n being an integer and being at least 4, polyethylene-polypropylene glycols, the sequence of the ethylene oxide or propylene oxide units being blockwise or random, polytetramethylene glycols, preferably with a molar weight of up to 5000 g/mol, poly-1,3-propanediols, preferably with a molar weight up to 5000 g/mol, polycaprolactones, or mixtures of two or more representatives of the above compounds. Diols whose use is preferred are ethylene glycol, 1,2-propanediol, 1,3-propanediol, 1,4-butanediol, 1,5-pentanediol, 1,6-hexanediol, 1,8-octanediol, 1,2-, 1,3- and 1,4-cyclohexanediol, 1,3- and 1,4-bis(hydroxymethyl)cyclohexane, and diethylene glycol, triethylene glycol, dipropylene glycol and tripropylene glycol.

Alcohols with a functionality of at least three comprise glycerol, trimethylolmethane, trimethylolethane, trimethylolpropane, 1,2,4-butanetriol, tris(hydroxymethyl) amine, tris(hydroxyethyl)amine, tris(hydroxypropyl)amine, pentaerythritol, diglycerol, triglycerol or higher condensates of glycerol, di(trimethylolpropane), di(pentaerythritol), trishydroxymethyl isocyanurate, tris(hydroxyethyl) isocyanurate (THEIC), tris(hydroxypropyl) isocyanurate, inositols or sugars, such as glucose, fructose or sucrose, for example, sugar alcohols such as sorbitol, isosorbide, mannitol, threitol, erythritol, adonitol (ribitol), arabitol (lyxitol), xylitol, dulcitol (galactitol), maltitol, isomalt, polyetherols with a functionality of three or more, based on alcohols with a functionality of three or more and on ethylene oxide, propylene oxide and/or butylene oxide.

In the case of alcohols with a functionality of hydroxy groups of three or higher not necessary all hydroxy groups may be etherised with vinyl groups as long as the functionality of vinyl groups is at least two. In this case the functionality of vinyl groups may also be a rational number.

Examples for C₁- to C₂₀-alkyl vinyl ethers are methyl vinyl ether, ethyl vinyl ether, *n*-propyl vinyl ether, *iso*-propyl vinyl ether, *n*-butyl vinyl ether, *sek*-butyl vinyl ether, *iso*-butyl vinyl ether, *tert-*butyl vinyl ether, *n*-pentyl vinyl ether, *n*-hexyl vinyl ether, *n*-octyl vinyl ether, *n*-decyl vinyl ether, *n*-dodecyl vinyl ether, *n*-tetradecyl vinyl ether, *n*-hexadecyl vinyl ether, *n*-octadecyl vinyl ether, and *n*-eicosyl vinyl ether. Among those examples the C₁- to C₁₀-alkyl vinyl ethers are preferred and the C₁- to C₄-alkyl vinyl ethers very preferred, especially methyl vinyl ether, ethyl vinyl ether, iso-propyl vinyl ether, iso-butyl vinyl ether, and n-butyl vinyl ether.

Examples for C₃- to C₂₀-alkenyl vinyl ethers are allyl vinyl ether, tetradec-9-enyl vinyl ether, hex-adec-9-enyl vinyl ether, octadec-9-enyl vinyl ether, octadec-11-enyl vinyl ether, octadec-9,12-dienyl vinyl ether, octadec-9,12,15-trienyl vinyl ether, and eicosa-5,8,11,14-tetraenyl vinyl ether.

Examples for cyclic vinyl ethers are 2,3-dihydrofuran and 3,4-dihydropyran.

Examples for vinyl ethers comprising alkylene glycol side chains are of formula

R¹-[-Xi-]ₙ-O-HC=CH₂

wherein
R¹ is hydrogen or a linear or branched C₁- to C₂₀-alkyl, preferably hydrogen or C₁- to C₄-alkyl, more preferably hydrogen, methyl, ethyl or n-butyl, and especially hydrogen,
n is a positive integer from 1 to 25, preferably from 1 to 20, more preferably from 1 to 15, and most preferably from 1 to 10, and
Xᵢ is for every i from 1 to n selected from the group consisting of -O-CH₂-CH₂-, -O-CH₂-CH(CH₃)-, -O-CH(CH₃)-CH₂-, -O-CH₂-C(CH₃)₂-, -O-C(CH₃)₂-CH₂-, -O-CH₂-CH(C₂H₅)-, -O-CH(C₂H₅)-CH₂- und -O-CH(CH₃)-CH(CH₃)-, preferably selected from the group consisting of -O-CH₂-CH₂-, -O-CH₂-CH(CH₃)-, -O-CH(CH₃)-CH₂-, -O-CH₂-C(CH₃)₂-, -O-C(CH₃)₂-CH₂-, -O-CH₂-CH(C₂H₅)-, and -O-CH(C₂H₅)-CH₂-, more preferably selected from the group consisting of -O-CH₂-CH₂-, -O-CH₂-CH(CH₃)-, -O-CH(CH₃)-CH₂-, -O-CH₂-C(CH₃)₂-, and -O-C(CH₃)₂-CH₂-, most preferably selected from the group consisting of -O-CH₂-CH₂-, -O-CH₂-CH(CH₃)- and -O-CH(CH₃)-CH₂-, and especially -O-CH₂-CH₂-.

Examples for vinyl ethers comprising ester groups in the side chain of formula

R²-(C=O)-[-Xᵢ-]ₙ-O-HC=CH₂

wherein
R² is hydrogen or a linear or branched C₁- to C₂₀-alkyl or linear or branched C₂- to C₂₀-alkenyl, preferably hydrogen or a linear or branched C₁- to C₁₀-alkyl or linear or branched C₁₂- to C₂₀-alkenyl,
n is a positive integer from 1 to 25, preferably from 1 to 20, more preferably from 1 to 15, and most preferably from 1 to 10, and
Xᵢ is for every i from 1 to n selected from the group consisting of -O-CH₂-CH₂-, -O-CH₂-CH(CH₃)-, -O-CH(CH₃)-CH₂-, -O-CH₂-C(CH₃)₂-, -O-C(CH₃)₂-CH₂-, -O-CH₂-CH(C₂H₅)-, -O-CH(C₂H₅)-CH₂- und -O-CH(CH₃)-CH(CH₃)-, preferably selected from the group consisting of -O-CH₂-CH₂-, -O-CH₂-CH(CH₃)-, -O-CH(CH₃)-CH₂-, -O-CH₂-C(CH₃)₂-, -O-C(CH₃)₂-CH₂-, -O-CH₂-CH(C₂H₅)-, and -O-CH(C₂H₅)-CH₂-, more preferably selected from the group consisting of -O-CH₂-CH₂-, -O-CH₂-CH(CH₃)-, -O-CH(CH₃)-CH₂-, -O-CH₂-C(CH₃)₂-, and -O-C(CH₃)₂-CH₂-, most preferably selected from the group consisting of -O-CH₂-CH₂-, -O-CH₂-CH(CH₃)- and -O-CH(CH₃)-CH₂-, and especially -O-CH₂-CH₂-.

Examples for C₆- to C₁₂-aryl vinyl ethers are phenyl vinyl ether, tolyl vinyl ether, and naphtyl vinyl ether.

An example for a vinyl ether comprising ester groups in the side chain is vinyloxyethyl malonate (VOEM).

Among the above-mentioned vinyl ethers C₁- to C₂₀-alkyl vinyl ethers and C₃- to C₂₀-alkenyl vinyl ethers are preferred, and more preferably the C₁- to C₂₀-alkyl vinyl ethers, even more preferably C₁- to C₁₀-alkyl vinyl ethers, very preferably C₁- to C₄-alkyl vinyl ethers, and especially methyl vinyl ether, ethyl vinyl ether, *n*-propyl vinyl ether, *iso*-propyl vinyl ether, *n*-butyl vinyl ether, *iso*-butyl vinyl ether, and *tert*-butyl vinyl ether.

In one embodiment of the present invention the vinyl ether is a long chain aliphatic vinyl ether selected from the group consisting of C₁₀- to C₂₀-alkyl vinyl ethers and C₁₀- to C₂₀-alkenyl vinyl ethers, preferably C₁₀- to C₂₀-alkyl vinyl ethers.

Preferably in this embodiment the vinyl ether (V) is selected from the group consisting of n-decyl vinyl ether, 3,7-dimethyloct-6-en-1-yl vinyl ether, 3,7-dimethyl-7-octen-1-yl vinyl ether, (E)-3,7-dimethyl-2,6-octadien-1-yl vinyl ether, (Z)-3,7-dimethyl-2,6-octadien-1-yl vinyl ether, n-dodecyl vinyl ether, *n*-tetradecyl vinyl ether, *n*-hexadecyl vinyl ether, *n*-octadecyl vinyl ether, *n*-eicosyl vinyl ether, tetradec-9-enyl vinyl ether, hexadec-9-enyl vinyl ether, octadec-9-enyl vinyl ether, octadec-11-enyl vinyl ether, octadec-9,12-dienyl vinyl ether, octadec-9,12,15-trienyl vinyl ether, and eicosa-5,8,11,14-tetraenyl vinyl ether.

In another embodiment of the present invention the vinyl ether is a cycloalkyl vinyl ether, preferably a C₅- to C₁₂-cycloalkyl vinyl ether, more preferably a C₅- to C₆-cycloalkyl vinyl ether.

Examples for C₅- to C₁₂-cycloalkyl vinyl ethers are cyclopentyl vinyl ether, cyclohexyl vinyl ether, cycloheptyl vinyl ether, and cyclododecyl vinyl ether, especially cyclohexyl vinyl ether.

Aldehydes (A) for use in the copolymerisation according to the present invention are selected from the group consisting of optionally substituted C₆- to C₁₂-aromatic aldehydes, furfural aldehydes, C₁- to C₁₀₀-aliphatic aldehydes, one- or multifold unsaturated C₃- to C₂₀-aliphatic aldehydes, preferably alpha,beta-unsaturated C₃- to C₂₀-aliphatic aldehydes, and C₅- to C₁₂-cycloaliphatic aldehydes, preferably selected from the group consisting of optionally substituted C₆- to C₁₂-aromatic aldehydes and C₁- to C₂₀-aliphatic aldehydes.

C₆- to C₁₂-aromatic aldehydes are optionally substituted benzaldehyde, 1-naphthaldehyde, and 2-naphthaldehyde.

Preferred is optionally substituted benzaldehyde of formula

R³-Ph-CHO

wherein
Ph is a benzene ring and
R³ is selected from the group consisting of hydrogen, C₁- to C₂₀-alkyl, C₁- to C₂₀-alkyloxy, and R⁴R⁵N-,
R⁴ and R⁵ independently of another are C₁- to C₄-alkyl or together with the nitrogen atom form a five- to seven-membered ring.

Substituent R³ and the aldehyde group -CHO are preferably located in position 2 or 4 to each other, preferably in position 4.

Examples of R³ are hydrogen, methyl, ethyl, *n*-propyl, iso-propyl, *n*-butyl, *sek-butyl,* iso-butyl, *tert*-butyl, *n*-pentyl, *n*-hexyl, *n*-octyl, 2-ethylhexyl, *n*-decyl, 2-propylheptyl, *n*-dodecyl, *n-*tetradecyl, *n*-hexadecyl, *n*-octadecyl, *n*-eicosyl, methoxy, ethoxy, tert.-butoxy, 2-ethylhexyloxy, and dimethylamino, preferably hydrogen, methyl, methoxy, and dimethylamino.

Preferred aromatic aldehydes are benzaldehyde, tolualdehyde, vanillin, *p*-methoxy benzaldehyde,
Preferred C₁- to C₁₀₀-aliphatic aldehydes are linear or branched C₁- to C₁₀₀-alkanals or linear or branched C₃- to C₁₀₀-alkenals, in which the double bond may be isolated or conjugated with the aldehyde group.

In one embodiment of the present invention the aldehyde is a low molecular, aliphatic, saturated or unsaturated, linear or branched C₁- to C₉-aldehyde, preferably saturated C₁- to C₉-aldehyde, more preferably selected from the group consisting of formaldehyde, acetaldehyde, propionaldehyde, butyraldehyde, iso valeraldehyde, hexanal and 2-ethylhexyl aldehyde.

In one embodiment of the present invention the aldehyde is a medium molecular, aliphatic, saturated or unsaturated, linear or branched C₁₀- to C₂₀-aldehyde, preferably branched unsaturated C₁₀- to C₂₀-aldehyde, more preferably selected from the group consisting of undecanal, tride-canal, pentadecanal, heptadecanal, and citronellal.

In one embodiment of the present invention the aldehyde is a high molecular, aliphatic, saturated or unsaturated, linear or branched C₃₅- to C₁₀₀-aldehyde, preferably C₅₀- to C₇₅-aldehyde.

Such aldehydes are preferably obtainable by Lewis Acid-catalysed polymerisation of a propene, 1-butene or isobutene to a polyolefin bearing an unsaturated terminal group, followed by hydroformylation to the corresponding aldehyde.

Hydroformylation is described e.g. in US 6331656 B1, preferably from column 2, line 54 to column 5, line 34, very preferably form column 4, line 24 to column 5, line 8, which is incorporated into the present disclosure by reference.

Preferably the aldehyde is selected from the group consisting of aldehydes obtained from hydroformylation or photooxygenation of oligo/polyisobutene with a number average molecular weight of from 100 to 1500, more preferably from 200 to 1200, and very preferably from 250 to 1100.

In one embodiment of the present invention the aldehyde is an alpha, beta-unsaturated C₃- to C₂₀-aliphatic aldehyde, which optionally may be substituted and is linear or branched. Examples are acrolein, methacrolein, crotonaldehyde, 3-hexenal, cis-4-heptenal, 2-ethylhexenal, decenal, 2-propylheptenal, citral, geranial, neral, and cinnamaldehyde.

C₅- to C₁₂-cycloaliphatic aldehydes may be cyclopentane aldehyde, cyclohexane aldehyde, and cyclododecane aldehyde.

The copolymers according to the invention and obtainable according to the process according to the present invention exhibits a weight average molecular weight M_{w} of from 1000 to 40000, preferably from 5000 to 30000, more preferably from 6000 to 25000 g/mol, determined by gel permeation chromatography.

The process according to the present invention usually yields copolymers with a polydispersity from 1 to 5, preferably from 1.1 to 3, more preferably from 1.2 to 2.5.

In the embodiment according to which the vinyl ether (V) bears two or more vinyl ether groups the weight average molecular weight M_{w} may be from 10000 to 150000, preferably from 15000 to 100000, more preferably from 20000 to 90000 g/mol, determined by gel permeation chromatography.

In the latter embodiment the process according to the present invention usually yields copolymers with a polydispersity from 1 to 10, preferably from 1.1 to 8, more preferably from 1.2 to 6.

Another subject of the present invention is a process for copolymerisation of at least one vinyl ether (V) and at least one aldehyde (A), optionally in the presence of at least one solvent, characterised in that the copolymerisation is carried out in the presence of at least one boron trihalide complex described above, optionally in the presence of at least one Brønsted Acid (BA) and/or Lewis Base (LB).

In the process the at least one vinyl ether (V) and the at least one aldehyde (A) is brought to reaction in a molar ratio of vinyl ethers (V) : aldehydes (A) from 10 : 1.2 to 1 : 1.2, preferably from 7 : 1.2 to 1 : 1.2, more preferably from 5 : 1.2 to 1 : 1.2, even more preferably from 3 : 1.2 to 1 : 1.2, and especially from 2 : 1.2 to 1 : 1.2.

The copolymerisation in the process according to the invention may optionally be conducted in the presence of an inert solvent. The inert solvent used should be suitable for reducing the increase in the viscosity of the reaction solution which generally occurs during the polymerisation reaction to such an extent that the removal of the heat of reaction which evolves can be ensured. In addition, the selected solvent needs to ensure monomer/polymer solubility even at the low reaction temperature employed. Suitable solvents are those solvents or solvent mixtures which are inert toward the reagents used. Suitable solvents are, for example, aliphatic hydrocarbons such as *n*-butane, *n*-pentane, *n*-hexane, *n*-heptane, *n*-octane and isooctane, cycloaliphatic hydrocarbons such as cyclopentane and cyclohexane, aromatic hydrocarbons such as benzene, toluene and the xylenes, and halogenated hydrocarbons, especially halogenated aliphatic hydrocarbons, such as methyl chloride, dichloromethane and trichloromethane (chloroform), 1,1-dichloroethane, 1,2-dichloroethane, trichloroethane and 1-chlorobutane, and also halogenated aromatic hydrocarbons and alkylaromatics halogenated in the alkyl side chains, such as chlorobenzene, monofluoromethylbenzene, difluoromethylbenzene and trifluoromethylbenzene, and mixtures of the aforementioned solvents. A non-halogenated solvent is preferred over the list of halogenated solvents.

The inventive copolymerisation may be performed in a halogenated hydrocarbon, especially in a halogenated aliphatic hydrocarbon, or in a mixture of halogenated hydrocarbons, especially of halogenated aliphatic hydrocarbons, or in a mixture of at least one halogenated hydrocarbon, especially a halogenated aliphatic hydrocarbon, and at least one aliphatic, cycloaliphatic or aromatic hydrocarbon as an inert solvent, for example a mixture of dichloromethane and n-hexane, typically in a volume ratio of 10:90 to 90:10, especially of 50:50 to 85:15.

The reaction time of the copolymerisation usually is 0.5 to 24 hours, preferably 1 to 10 hours, and more preferably 1.5 to 7 hours.

The copolymerisation is usually carried out at a temperature of from -90 to 0 °C, preferably from -80 to -20 °C, more preferably from -78 to -34 °C.

The tuning of reaction time and temperature depends on the reactivity of aldehyde (A), vinyl ether (V), and boron trihalide complex used. It may be necessary to systematically vary reaction time, temperature, and boron trihalide complex in order to optimise yield and selectivity of the copolymerisation.

Next to the polymer, also a certain amount of trimer/oligomers is being formed. Aoshima has also reported these side products with GaCl₃, while similar amounts of trimer/oligomers were found with BF₃.

After the reaction has reached the desired conversion, the copolymerisation is stopped by quenching with at least one of alcohols, water, ammonia, amines, hydroxides, carbonates, and hydrogen carbonates. Ammonia, amines, hydroxides, carbonates, and hydrogen carbonates may also be used as aqueous solutions.

Alcohols may for example be the above-mentioned alcohols ROH, preferably ethanol.

Water and alcohols are preferred among the mentioned quenching agents.

The quenching agent is used at least in amounts sufficient to deactivate the boron trihalide complex.

Especially in the case of water or aqueous solutions as quenching agent the aqueous phase furthermore acts to extract hydrolysed products of the boron trihalide complex from the reaction mixture or water-soluble by-products.

Quenching usually occurs at the reaction temperature at which the copolymerisation is conducted and usually only takes a few seconds to several minutes to happen. After quenching is completed the reaction mixture is allowed to warm up to the desired temperature at which the reaction mixture shall further be processed, preferably to room temperature.

Optionally, the copolymers can be purified using an extraction procedure which removes residual monomer and/or salts.

In a preferred embodiment a further processing of the reaction mixture comprises the hydrolysis of the copolymer obtained according to the reaction according to the invention.

For the hydrolysis the copolymer is optionally dissolved in at least one solvent and reacted with water in the presence of at least one Bronsted Acid with a pKₐ-value of not more than 3.0, more preferably not more than 2.0.

The solvent in the hydrolysis step may be the same of different from the solvent in which the copolymerisation is carried out.

Preferably an inert organic solvent is used which is water soluble so that the reaction mixture is well mixed with the Bronsted Acid used which usually is an aqueous solution. Examples for such solvents are ethers, especially tetrahydrofurane and dioxane.

Examples of Bronsted Acids are hydrochloric acid, sulfuric acid, phosphoric acid, nitric acid, methane sulfonic acid, ethane sulfonic acid, benzene sulfonic acid, p-toluene sulfonic acid, and *para*-C₆- to C₂₀-alkyl benzene sulfonic acid, preferably in their aqueous solutions. Very preferably hydrochloric acid, phosphoric acid, and sulfuric acid are used, especially hydrochloric acid and phosphoric acid.

The reaction mixture to which the Bronsted Acid is added is stirred for a time of from 0.5 to 96 hours, preferably from 1 to 48 hours at a hydrolysis temperature of from 0 °C to 60 °C, preferably from ambient temperature to 40 °C.

After the hydrolysis is completed the reaction mixture is neutralised, preferably with aqueous solutions of (earth) alkaline metal hydroxides, -carbonates, or -hydrogen carbonates.

Further water immiscible organic solvent may be added and the organic phase is washed one or several times with water or brine.

Afterwards the organic phase may be used as such or the solvent or solvents used may be distilled off at reduced temperature.

The product of the hydrolysis is an alpha, beta-unsaturated aldehyde based upon aldehyde (A) which is extended by two further carbon atoms now forming C₁ and C₂ of the newly formed alpha, beta-unsaturated aldehyde. The CHO-group of aldehyde (A) now forms C₃ of the newly formed alpha, beta-unsaturated aldehyde.

Hence, for example benzaldehyde may be converted into cinnamyl aldehyde using the copolymerisation according to the present invention followed by hydrolysis of the resulting copolymer.

Furthermore, if aldehydes from natural sources are used as comonomers, such as benzaldehyde, citronellal or citral, the resulting copolymer can be produced using sustainable resources.

With the appropriate choice of aldehyde and vinyl ether only environmentally friendly degradation products are released.

The examples which follow are intended to illustrate the present invention in detail without restricting it.

### Examples

### Preparation of BF₃•MeOH

10 g of dry methanol were placed in a stirred vessel and purged with gaseous BF₃ under inert conditions at -20 °C. The determination of BF₃ to methanol ratio was performed via elemental analysis.

### Typical polymerisation procedure

Reagents were not distilled or dried before use, but used as obtained. Polymerisation was carried out under a dry nitrogen atmosphere in a 500 mL baked glass tube equipped with a four-way stopcock. The pre-chilled Brønsted acid was added to a stirred pre-chilled mixture of both monomers, the Lewis Base and 200 mL toluene at 0 °C. The temperature was subsequently lowered to -78°C and the reaction was started by the addition via dry medical syringe of pre-chilled Lewis acid. The reaction mixture was magnetically stirred throughout the polymerization. After a reaction time of 2-6 hours, the polymerization was quenched with pre-chilled methanol containing a small amount of ammonia solution. The quenched reaction mixture was diluted with dichloromethane and then washed with water to remove the initiator residues. After filtration, the solvent and other volatiles were evaporated under reduced pressure (50 °C, 5 mbar), and the residue was vacuum-dried for at least 6 h at 50 °C. The monomer conversion was determined by ¹H NMR, molecular weight and molecular weight distribution by GPC in THF against polystyrene standards.

### Typical extraction procedure (optional)

The obtained copolymer was washed two times with methanol. Each time, the upper methanol phase was discarded. The obtained viscous or solid residue was subsequently dried under reduced pressure (50 °C, 5 mbar). The copolymer was dissolved in few dichloromethane and placed on a foil. Solvent was allowed to evaporate and the obtained film was dried at 50 °C, 10 mbar overnight. In some cases, a white powder was obtained by milling of the film in a milling apparatus.

### Typical hydrolysis procedure

The copolymer was dissolved in few THF under magnetic stirring. A 1.0 M acid solution was added and the mixture was stirred for 4 days at room temperature. Then, aqueous NaOH was added. The mixture was diluted with dichloromethane and the two phases were separated by extraction. The organic phase was washed three times with water after which the solvents were evaporated at 25-50 °C, 5 mbar to (typically) obtain a transparent, oily or solid product.

**Table 1: Overview of examples.**

| # | VE | Aldehyde | Lewis Acid | Brønsted Acid | Lewis Base | M_{w} (g/mol) | PDI | Residual Aldehyde (%) |
|---|---|---|---|---|---|---|---|---|
| 1 (C) | 0.15 mol IBVE | 0.15 mol Anisaldehyde | 1 mmol GaCl₃ | 1 mmol EtSO₃H | 0.25 mol dioxane | 15700 | 2.0 | 14 |
| 2 (C) | 0.15 mol IBVE | 0.15 mol Anisaldehyde | 1 mmol BF₃•(OEt)₂ | 1 mmol MeSO₃H | 0.25 mol dioxane | No polymer | | 78 |
| 3 (C) | 0.15 mol IBVE | 0.15 mol Anisaldehyde | 1.5 mmol BF₃•(OEt)₂ | 1 mmol MeSO₃H | 0.25 mol dioxane | No polymer | | 83 |
| 4 | 0.15 mol IBVE | 0.15 mol Anisaldehyde | 1 mmol BF₃•(0.92 Me-OH) | 1 mmol MeSO₃H | 0.25 mol dioxane | 14700 | 2.2 | 20 |
| 5 | 0.15 mol IBVE | 0.15 mol Anisaldehyde | 1 mmol BF₃•(0.92 MeOH | 0.83 mmol MeSO₃H | 0.25 mol dioxane | 17400 | 2.3 | 20 |
| 6 | 0.15 mol IBVE | 0.15 mol Anisaldehyde | 1 mmol BF₃•(0.92MeOH) | 1 mmol MeSO₃H | 0.125 mol dioxane | 18800 | 2.7 | 17 |
| 7 | 0.15 mol IBVE | 0.15 mol Anisaldehyde | 1.5 mmol BF₃•(0.92MeOH) | 1 mmol MeSO₃H | 0.25 mol dioxane | 13200 | 2.1 | 22 |
| 8 | 0.15 mol IBVE | 0.15 mol Anisaldehyde | 0,5 mmol BF₃•(0.92MeOH) | 1 mmol MeSO₃H | 0.25 mol dioxane | 18000 | 2.5 | 16 |
| 9 | 0.15 mol IBVE | 0.15 mol Benzaldehyde | 1 mmol BF₃•(0.92MeOH) | 1 mmol MeSO₃H | 0.25 mol dioxane | 20900 | 2.8 | n.d. |
| 10 | 0.15 mol IBVE | 0.15 mol Cis-4-heptene-1-al | 1 mmol BF₃•(0.92MeOH) | 1 mmol MeSO₃H | 0.25 mol dioxane | 14600 (RI) | 4.3 | <1 |
| 11 | 0.15 mol EVE | 0.15 mol Anisaldehyde | 1 mmol BF₃•(0.92MeOH) | 1 mmol MeSO₃H | 0.25 mol dioxane | 10700 | 2.1 | 26 |
| 12 | 0.15 mol IBVE | 0.15 mol Trans-2-decenal | 1 mmol BF₃•(0.92MeOH) | 1 mmol MeSO₃H | 0.25 mol dioxane | 8800 (RI) | 1.6 | <1 |
| 13 | 0.15 mol IBVE | 0.15 mol Anisaldehyde | 1 mmol BF₃•(0.92MeOH) | 1 mmol MeSO₃H | none | 15000 | 2.2 | 23 |

| | | | | | | | | |
|---|---|---|---|---|---|---|---|---|
| IBVE: iso-butyl vinyl ether MeOH: methanol EtSO₃H / MeSO₃H: ethane / methane sulfonic acid n.d. = not determined Mw measured using UV-detection unless explicitly stated to be determined using RI-detection (C): Comparative Example | | | | | | | | |

A comparison of comparative Example 1 with Examples 4 to 6 shows comparable conversion rates and molecular weight as with GaCl₃, however, with the much easier to handle catalyst complex BF₃•(0.92MeOH) according to the present invention.

The catalyst system BF₃•(OEt)₂ does not yield any significant amounts of a copolymer of anisaldehyde and iso-butyl vinyl ether.

## Claims

1. Process for copolymerisation of at least one vinyl ether (V) and at least one aldehyde (A), optionally in the presence of at least one solvent, **characterised in that** the copolymerisation is carried out in the presence of at least one reactive boron trihalide complex of the formula
BX₃ × x ROH
wherein
X is a halide, preferably selected from the group consisting of fluorine, chlorine, and bromine, more preferably selected from the group consisting of fluorine and chlorine, and especially fluorine,
ROH is an alcohol or water, preferably an alkanol, more preferably a linear or branched C₁-C₁₀-alkanol, even more preferably a linear or branched C₁-C₄-alkanol x is a positive number of more than 0 (zero)
optionally in the presence of at least one Brønsted Acid (BA) and/or Lewis Base (LB), wherein the molar ratio of vinyl ethers (V) : aldehydes (A) is from 10 : 1 to 1 : 1, preferably from 7 : 1.2 to 1 : 1.2, more preferably from 5 : 1.2 to 1 : 1.2, even more preferably from 3 : 1.2 to 1 : 1.2, and especially from 2 : 1.2 to 1 : 1.2.

2. Process according to Claim 1, wherein the alcohol ROH is selected from the group consisting of methanol, ethanol, *n*-propanol, *iso*-propanol, *n*-butanol, and *tert.* butanol.

3. Process according to Claim 1 or 2, wherein the Brønsted Acid (BA) is selected from the group consisting of organic sulfonic acids and sulfuric acid, preferably sulfonic acids, more preferably aliphatic or aromatic sulfonic acids, even more preferably C₁- to C₄-alkyl sulfonic acids, especially methane sulfonic acid and ethane sulfonic acid.

4. Process according to any of the Claims 1 to 3, wherein the Lewis Base (LB) is selected from the group consisting of ethers and esters, preferably aliphatic or cycloaliphatic ethers, more preferably selected from the group consisting of di(C₁- to C₄-alkyl) ethers, tetrahydrofurane, tetrahydropyrane, and dioxane, and especially selected from the group consisting of tetrahydrofurane, tetrahydropyrane, and dioxane.

5. Process according to any of the preceding claims, wherein the vinyl ethers (V) are C₁- to C₂₀-alkyl vinyl ethers, C₃- to C₂₀-alkenyl vinyl ethers, C₅- to C₁₂-cycloalkyl vinyl ethers, cyclic vinylethers, such as 2,3-dihydrofuran, 3,4-dihydropyran, vinyl ethers comprising alkylene glycol side chains, vinyl ethers comprising ester groups in the side chain, and C₆- to C₁₂-aryl vinyl ethers, preferably C₁- to C₂₀-alkyl vinyl ethers, C₃- to C₂₀-alkenyl vinyl ethers, and C₅- to C₁₂-cycloalkyl vinyl ethers, more preferably C₁- to C₂₀-alkyl vinyl ethers and C₃- to C₂₀-alkenyl vinyl ethers, and especially C₁- to C₂₀-alkyl vinyl ethers.

6. Process according to any one of Claims 1 to 4, wherein the vinyl ethers (V) bear two or more vinyl ether groups.

7. Process according to any of the preceding claims, wherein the aldehyde (A) is selected from the group consisting of optionally substituted C₆- to C₁₂-aromatic aldehydes, C₁- to C₁₀₀-aliphatic aldehydes, one- or multifold unsaturated C₃- to C₂₀-aliphatic aldehydes, preferably alpha, beta-unsaturated C₃- to C₂₀-aliphatic aldehydes, and C₅- to C₁₂-cycloaliphatic aldehydes, preferably selected from the group consisting of optionally substituted C₆- to C₁₂-aromatic aldehydes and C₁- to C₂₀-aliphatic aldehydes.

8. Process according to any of the preceding claims, wherein the copolymerisation is carried out at a temperature of from -90 to 0 °C, preferably from -80 to -20 °C, more preferably from -78 to -34 °C.

9. Process according to any of the preceding claims, wherein the copolymerisation is carried out for 0.5 to 24 hours, preferably 1 to 10 hours, and more preferably 1.5 to 7 hours.

10. Process according to any of the preceding claims, wherein the copolymerisation is stopped by quenching with alcohols, water, ammonia, amines, hydroxides, carbonates, and hydrogen carbonates.

11. Copolymer, comprising in polymerised form at least one vinyl ether (V) and at least one aldehyde (A), **characterised in that** the at least one aldehyde (A) is an aliphatic aldehyde, preferably a C₁- to C₁₀₀-aliphatic aldehyde wherein the molar incorporation ratio of vinyl ethers (V) : aldehydes (A) is from 10 : 1 to 1 : 1, preferably from 7 : 1 to 1 : 1, more preferably from 5 : 1 to 1 : 1, even more preferably from 3 : 1 to 1 : 1, and especially from 2 : 1 to 1 : 1.

12. Copolymer, comprising in polymerised form at least one vinyl ether (V) and at least one aldehyde (A), **characterised in that** the at least one vinyl ether (V) is a C₅- to C₁₂-cycloalkyl vinyl ether, wherein the molar incorporation ratio of vinyl ethers (V) : aldehydes (A) is from 10 : 1 to 1 : 1, preferably from 7 : 1 to 1 : 1, more preferably from 5 : 1 to 1 : 1, even more preferably from 3 : 1 to 1 : 1, and especially from 2 : 1 to 1 : 1.

13. Copolymer, comprising in polymerised form at least one vinyl ether (V) and at least one aldehyde (A), **characterised in that** the at least one vinyl ether (V) is selected from the group consisting of C₁₀- to C₂₀-alkyl vinyl ethers and C₁₀- to C₂₀-alkenyl vinyl ethers, wherein the molar incorporation ratio of vinyl ethers (V) : aldehydes (A) is from 10 : 1 to 1 : 1, preferably from 7 : 1 to 1 : 1, more preferably from 5 : 1 to 1 : 1, even more preferably from 3 : 1 to 1 : 1, and especially from 2 : 1 to 1 : 1.

14. Copolymer according to any of Claims 11 4& to 13, wherein the polydispersity is from 1 to 5, preferably from 1.1 to 3, more preferably from 1.2 to 2.5.

15. Copolymer according to any of Claims 11 to 14, wherein the weight average molecular weight M_{w} is from 1000 to 40000, preferably from 5000 to 30000, more preferably from 6000 to 25000 g/mol, as determined by gel permeation chromatography.

16. Process for hydrolysis of a copolymer according to any of the Claims 11 to 15, wherein
the copolymer is optionally dissolved in at least one solvent and reacted with water in the presence of at least one Brønsted Acid with a pKₐ-value of not more than 3.0, more preferably not more than 2.0.

## Patentansprüche

1. Verfahren zur Copolymerisation von mindestens einem Vinylether (V) und mindestens einem Aldehyd (A), gegebenenfalls in Gegenwart mindestens eines Lösungsmittels, **dadurch gekennzeichnet, dass** die Copolymerisation in Gegenwart von mindestens einem reaktiven Bortrihalogenidkomplex der Formel durchgeführt wird:
BX₃ × X ROH
wobei
X für ein Halogenid steht, das vorzugsweise aus der Gruppe bestehend aus Fluor, Chlor und Brom und weiter bevorzugt aus der Gruppe bestehend aus Fluor und Chlor ausgewählt ist und insbesondere für Fluor steht,
ROH für einen Alkohol oder Wasser steht, vorzugsweise ein Alkanol, weiter bevorzugt ein lineares oder verzweigtes C₁-C₁₀-Alkanol, noch weiter bevorzugt ein lineares oder verzweigtes C₁-C₄-Alkanol, x für eine positive Zahl mit einem Wert von mehr als 0 (null) steht,
gegebenenfalls in Gegenwart von mindestens einer Brönsted-Säure (BA) und/oder Lewis-Base (LB), wobei das Molverhältnis von Vinylethern (V) : Aldehyden (A) 10 : 1 bis 1 : 1, vorzugsweise 7 : 1,2 bis 1 : 1,2, weiter bevorzugt 5 : 1,2 bis 1 : 1,2, noch weiter bevorzugt 3 : 1,2 bis 1 : 1,2 und insbesondere 2 : 1,2 bis 1 : 1,2 beträgt.

2. Verfahren nach Anspruch 1, wobei der Alkohol ROH aus der Gruppe bestehend aus Methanol, Ethanol, n-Propanol, Isopropanol, n-Butanol und tert.-Butanol ausgewählt wird.

3. Verfahren nach Anspruch 1 oder 2, wobei die Brönsted-Säure (BA) aus der Gruppe bestehend aus organischen Sulfonsäuren und Schwefelsäure, vorzugsweise Sulfonsäuren, weiter bevorzugt aliphatischen oder aromatischen Sulfonsäuren, noch weiter bevorzugt C₁- bis C₄-Alkylsulfonsäuren, insbesondere Methansulfonsäure und Ethansulfonsäure, ausgewählt wird.

4. Verfahren nach einem der Ansprüche 1 bis 3, wobei die Lewis-Base (LB) aus der Gruppe bestehend aus Ethern und Estern, vorzugsweise aliphatischen oder cycloaliphatischen Ethern, weiter bevorzugt aus der Gruppe bestehend aus Di(C₁- bis C₄-alkyl)ethern, Tetrahydrofuran, Tetrahydropyran und Dioxan und insbesondere aus der Gruppe bestehend aus Tetrahydrofuran, Tetrahydropyran und Dioxan ausgewählt wird.

5. Verfahren nach einem der vorhergehenden Ansprüche, wobei es sich bei den Vinylethern (V) um C₁- bis C₂₀-Alkylvinylether, C₃- bis C₂₀-Alkenylvinylether, C₅- bis C₁₂-Cycloalkylvinylether, cyclische Vinylether, wie 2,3-Dihydrofuran, 3,4-Dihydropyran, Vinylether mit Alkylenglykol-Seitenketten, Vinylether mit Estergruppen in der Seitenkette und C₆- bis C₁₂-Arylvinylethern, vorzugsweise C₁- bis C₂₀-Alkylvinylether, C₃- bis C₂₀-Alkenylvinylether und C₅- bis C₁₂-Cycloalkylvinylether, weiter bevorzugt C₁- bis C₂₀-Alkylvinylether und C₃- bis C₂₀-Alkenylvinylether und insbesondere C₁- bis C₂₀-Alkylvinylether handelt.

6. Verfahren nach einem der Ansprüche 1 bis 4, wobei die Vinylether (V) zwei oder mehr Vinylethergruppen tragen.

7. Verfahren nach einem der vorhergehenden Ansprüche, wobei der Aldehyd (A) aus der Gruppe bestehend aus gegebenenfalls substituierten aromatischen C₆- bis C₁₂-Aldehyden, aliphatischen C₁- bis C₁₀₀-Aldehyden, ein- oder mehrfach ungesättigten aliphatischen C₃- bis C₂₀-Aldehyden, vorzugsweise alpha, beta-ungesättigten aliphatischen C₃- bis C₂₀-Aldehyden, und cycloaliphatischen C₃- bis C₁₂-Aldehyden, und vorzugsweise aus der Gruppe bestehend aus gegebenenfalls substituierten aromatischen C₆- bis C₁₂-Aldehyden und aliphatischen C₁- bis C₂₀-Aldehyden ausgewählt wird.

8. Verfahren nach einem der vorhergehenden Ansprüche, wobei die Copolymerisation bei einer Temperatur von -90 bis 0 °C, vorzugsweise von -80 bis -20 °C, weiter bevorzugt von -78 bis -34 °C, durchgeführt wird.

9. Verfahren nach einem der vorhergehenden Ansprüche, wobei die Copolymerisation über einen Zeitraum von 0,5 bis 24 Stunden, vorzugsweise 1 bis 10 Stunden und weiter bevorzugt 1,5 bis 7 Stunden durchgeführt wird.

10. Verfahren nach einem der vorhergehenden Ansprüche, wobei die Copolymerisation durch Quenchen mit Alkoholen, Wasser, Ammoniak, Aminen, Hydroxiden, Carbonaten und Hydrogencarbonaten gestoppt wird.

11. Copolymer, umfassend in polymerisierter Form mindestens einen Vinylether (V) und mindestens einen Aldehyd (A), **dadurch gekennzeichnet, dass** es sich bei dem mindestens einen Aldehyd (A) um einen aliphatischen Aldehyd, vorzugsweise einen aliphatischen C₁- bis C₁₀₀-Aldehyd handelt, wobei das molare Einbauverhältnis von Vinylethern (V) : Aldehyden (A) 10 : 1 bis 1 : 1, vorzugsweise 7 : 1 bis 1 : 1, weiter bevorzugt 5 : 1 bis 1 : 1, noch weiter bevorzugt 3 : 1 bis 1 : 1 und insbesondere 2 : 1 bis 1 : 1 beträgt.

12. Copolymer, umfassend in polymerisierter Form mindestens einen Vinylether (V) und mindestens einen Aldehyd (A), **dadurch gekennzeichnet, dass** es sich bei dem mindestens einen Vinylether (V) um einen C₅- bis C₁₂-Cycloalkylvinylether handelt, wobei das molare Einbauverhältnis von Vinylethern (V) : Aldehyden (A) 10 : 1 bis 1 : 1, vorzugsweise 7 : 1 bis 1 : 1, weiter bevorzugt 5 : 1 bis 1 : 1, noch weiter bevorzugt 3 : 1 bis 1 : 1 und insbesondere 2 : 1 bis 1 : 1 beträgt.

13. Copolymer, umfassend in polymerisierter Form mindestens einen Vinylether (V) und mindestens einen Aldehyd (A), **dadurch gekennzeichnet, dass** der mindestens eine Vinylether (V) aus der Gruppe bestehend aus C₁₀- bis C₂₀-Alkylvinylethern und C₁₀- bis C₂₀-Alkenylvinylethern ausgewählt ist, wobei das molare Einbauverhältnis von Vinylethern (V) : Aldehyden (A) 10 : 1 bis 1 : 1, vorzugsweise 7 : 1 bis 1 : 1, weiter bevorzugt 5 : 1 bis 1 : 1, noch weiter bevorzugt 3 : 1 bis 1 : 1 und insbesondere 2 : 1 bis 1 : 1 beträgt.

14. Copolymer nach einem der Ansprüche 11 bis 13, wobei die Polydispersität 1 bis 5, vorzugsweise 1,1 bis 3, weiter bevorzugt 1,2 bis 2,5, beträgt.

15. Copolymer nach einem der Ansprüche 11 bis 14, wobei das gewichtsmittlere Molekulargewicht M_{w} 1000 bis 40.000, vorzugsweise 5000 bis 30.000 und weiter bevorzugt 6000 bis 25.000 g/mol beträgt, wie durch Gelpermeationschromatographie gemessen.

16. Verfahren zur Hydrolyse eines Copolymers nach einem der Ansprüche 11 bis 15, wobei das Copolymer gegebenenfalls in mindestens einem Lösungsmittel gelöst und in Gegenwart von mindestens einer Brönsted-Säure mit einem pKₐ-Wert von nicht mehr als 3,0, weiter bevorzugt nicht mehr als 2,0, mit Wasser umgesetzt wird.

## Revendications

1. Procédé de copolymérisation d'au moins un éther de vinyle (V) et d'au moins un aldéhyde (A), éventuellement en présence d'au moins un solvant, **caractérisé en ce que** la copolymérisation est effectuée en présence d'au moins un complexe de trihalogénure de bore réactif de la formule
BX₃ × X ROH
dans laquelle
X est un halogénure, préférablement sélectionné dans le groupe constitué par fluor, chlore et brome, plus préférablement sélectionné dans le groupe constitué par fluor et chlore, et notamment fluor,
ROH est un alcool ou l'eau, préférablement un alcanol, plus préférablement un C₁-C₁₀-alcanol linéaire ou ramifié, encore plus préférablement un C₁-C₄-alcanol linéaire ou ramifié, x est un nombre positif supérieur à 0 (zéro) éventuellement, en présence d'au moins un(e) acide de Brønsted (BA) et/ou base de Lewis (LB), dans lequel le rapport molaire d'éthers de vinyle (V) : aldéhydes (A) est de 10 : 1 à 1 : 1, préférablement de 7 : 1,2 à 1 : 1,2, plus préférablement de 5 : 1,2 à 1 : 1,2, encore plus préférablement de 3 : 1,2 à 1 : 1,2, et notamment de 2 : 1,2 à 1 : 1,2.

2. Procédé selon la revendication 1, dans lequel l'alcool ROH est sélectionné dans le groupe constitué par méthanol, éthanol, n-propanol, iso-propanol, n-butanol, et tert. butanol.

3. Procédé selon la revendication 1 ou 2, dans lequel l'acide de Brønsted (BA) est sélectionné dans le groupe constitué par des acides sulfoniques organiques et l'acide sulfurique, préférablement des acides sulfoniques, plus préférablement des acides sulfoniques aliphatiques ou aromatiques, encore plus préférablement des acides alkylsulfoniques en C₁- à C₄-, notamment l'acide méthanesulfonique et l'acide éthanesulfonique.

4. Procédé selon l'une quelconque des revendications 1 à 3, dans lequel la base de Lewis (LB) est sélectionnée dans le groupe constitué par des éthers et des esters, préférablement des éthers aliphatiques ou cycloaliphatiques, plus préférablement sélectionnée dans le groupe constitué par des éthers de di(C₁- à C₄-alkyle), le tétrahydrofuranne, le tétrahydropyranne et le dioxanne, et notamment sélectionnée dans le groupe constitué par le tétrahydrofuranne, le tétrahydropyranne et le dioxanne.

5. Procédé selon l'une quelconque des revendications précédentes, les éthers de vinyle (V) étant des éthers de vinyle et de C₁- à C₂₀-alkyle, des éthers de vinyle et de C₃- à C₂₀-alcényle, des éthers de vinyle et de C₅- à C₁₂-cycloalkyle, des éthers de vinyle cycliques, tels que le 2,3-dihydrofuranne, le 3,4-dihydropyrane, des éthers de vinyle comprenant des chaînes latérales d'alkylèneglycol, des éthers de vinyle comprenant des groupes ester dans la chaîne latérale, et des éthers de vinyle et de C₆- à C₁₂-aryle, préférablement des éthers de vinyle et de C₁- à C₂₀-alkyle, des éthers de vinyle et de C₃- à C₂₀-alcényle, et des éthers de vinyle et de C₅- à C₁₂-cycloalkyle, plus préférablement des éthers de vinyle et de C₁- à C₂₀-alkyle et des éthers de vinyle et de C₃- à C₂₀-alcényle, et notamment des éthers de vinyle et de C₁- à C₂₀-alkyle.

6. Procédé selon l'une quelconque des revendications 1 à 4, les éthers de vinyle (V) portant deux groupes éther de vinyle ou plus.

7. Procédé selon l'une quelconque des revendications précédentes, l'aldéhyde (A) étant sélectionné dans le groupe constitué par des aldéhydes C₆- à C₁₂-aromatiques éventuellement substitués, des aldéhydes C₁- à C₁₀₀-aliphatiques, des aldéhydes C₃- à C₂₀-aliphatiques monoinsaturés ou polyinsaturés, préférablement des aldéhydes C₃- à C₂₀-aliphatiques alpha,bêta-insaturés, et des aldéhydes C₅- à C₁₂-cycloaliphatiques, préférablement sélectionné dans le groupe constitué par des aldéhydes C₆- à C₁₂-aromatiques éventuellement substitués et des aldéhydes C₁- à C₂₀-aliphatiques.

8. Procédé selon l'une quelconque des revendications précédentes, dans lequel la copolymérisation est effectuée à une température allant de -90 à 0 °C, préférablement de -80 à -20 °C, plus préférablement de - 78 à -34 °C.

9. Procédé selon l'une quelconque des revendications précédentes, dans lequel la copolymérisation est effectuée pendant 0,5 à 24 heures, préférablement 1 à 10 heures, et plus préférablement 1,5 à 7 heures.

10. Procédé selon l'une quelconque des revendications précédentes, dans lequel la copolymérisation est arrêtée par trempage avec des alcools, de l'eau, de l'ammoniac, des amines, des hydroxydes, des carbonates et des hydrogénocarbonates.

11. Copolymère, comprenant sous forme polymérisée au moins un éther de vinyle (V) et au moins un aldéhyde (A), **caractérisé en ce que** l'au moins un aldéhyde (A) est un aldéhyde aliphatique, préférablement un aldéhyde C₁- à C₁₀₀-aliphatique, dans lequel le rapport d'incorporation molaire des éthers de vinyle (V) : aldéhydes (A) est de 10 : 1 à 1 : 1, préférablement de 7 : 1 à 1 : 1, plus préférablement de 5 : 1 à 1 : 1, encore plus préférablement de 3 : 1 à 1 : 1, et notamment de 2 : 1 à 1 : 1.

12. Copolymère, comprenant sous forme polymérisée au moins un éther de vinyle (V) et au moins un aldéhyde (A), **caractérisé en ce que** l'au moins un éther de vinyle (V) est un éther de vinyle et de C₅- à C₁₂-cycloalkyle, dans lequel le rapport d'incorporation molaire des éthers de vinyle (V) : aldéhydes (A) est de 10 : 1 à 1 : 1, préférablement de 7 : 1 à 1 : 1, plus préférablement de 5 : 1 à 1 : 1, encore plus préférablement de 3 : 1 à 1 : 1, et notamment de 2 : 1 à 1 : 1.

13. Copolymère, comprenant sous forme polymérisée au moins un éther de vinyle (V) et au moins un aldéhyde (A), **caractérisé en ce que** l'au moins un éther de vinyle (V) est sélectionné dans le groupe constitué par des éthers de vinyle et de C₁₀- à C₂₀-alkyle et des éthers de vinyle et de C₁₀- à C₂₀-alcényle, dans lequel le rapport d'incorporation molaire des éthers de vinyle (V) : aldéhydes (A) est de 10 : 1 à 1 : 1, préférablement de 7 : 1 à 1 : 1, plus préférablement de 5 : 1 à 1 : 1, encore plus préférablement de 3 : 1 à 1 : 1, et notamment de 2 : 1 à 1 : 1.

14. Copolymère selon l'une quelconque des revendications 11 à 13, dans lequel la polydispersité est de 1 à 5, préférablement de 1,1 à 3, plus préférablement de 1,2 à 2,5.

15. Copolymère selon l'une quelconque des revendications 11 à 14, dans lequel le poids moléculaire moyen en poids M_{W} est de 1 000 à 40 000, préférablement de 5 000 à 30 000, plus préférablement de 6 000 à 25 000 g/mole, tel que déterminé par chromatographie à perméation de gel.

16. Procédé d'hydrolyse d'un copolymère selon l'une quelconque des revendications 11 à 15, dans lequel le copolymère est éventuellement dissous dans au moins un solvant et mis à réagir avec de l'eau en présence d'au moins un acide de Brønsted doté d'une valeur de pKₐ de pas plus de 3,0, plus préférablement de pas plus de 2,0.
